# EUROPÄISCHE PATENTSCHRIFT

(11) **EP 4 392 615 B1**
(45) Veröffentlichungstag und Bekanntmachung des Hinweises auf die Patenterteilung: **06.05.2026**
(21) Anmeldenummer: 22789457.3
(22) Anmeldetag: 22.08.2022
(51) Int. Cl.: E02D 17/10, H02G 9/02

(54) **TIEFBAUWERK FÜR DAS FÜHREN EINER LEITUNG**
CIVIL ENGINEERING STRUCTURE FOR GUIDING A LINE
STRUCTURE SOUTERRAINE POUR LE GUIDAGE D'UNE CONDUITE

(30) Priorität: 23.08.2021 AT 1432021; 26.08.2021 AT 1462021; 10.02.2022 AT 422022
(43) Veröffentlichungstag der Anmeldung: 03.07.2024
(73) Patentinhaber: Pichler, Alois, 3341 Ybbsitz (AT)
(72) Erfinder: PICHLER, Jan Michael, 3341 Ybbsitz (AT); PICHLER, Lorenz, 3341 Ybbsitz (AT); PICHLER, Alois, 3341 Ybbsitz (AT)
(86) Internationale Anmeldenummer: PCT/AT2022/000005
(87) Internationale Veröffentlichungsnummer: WO 2023/023679

(56) Entgegenhaltungen:
- EP-B1- 2 868 827
- WO-A1-02/084033
- AT-B- 334 449
- GB-A- 2 321 486
- US-A- 3 473 339

## Beschreibung

Die Erfindung betrifft ein Tiefbauwerk für das Führen einer Leitung in einem Schlitz in einer Bodenfläche im Freien.

Im Bereich von mit festem Material versiegelten Oberflächen, wie typischerweise Straßen oder Bürgersteigen, wird für das Verlegen von Leitungen, wie beispielsweise Glasfaserkabeln, nicht zwangsweise eine ganze Künette ausgebaggert, sondern oftmals nur ein Schlitz in das feste - also nicht granulare - Oberflächenmaterial (Asphalt, Beton oder Pflastersteine) gefräst oder geschliffen, dann die Leitung eingelegt, und dann der Schlitz wieder verschlossen.

Die EP 2526450 B1 offenbart so ein Tiefbauwerk für das Führen von Leitungen in einem in einem Boden ausgebildeten Schlitz. Der Schlitz hat eine sich zumindest in einer Stufe nach unten hin verengende Querschnittsfläche. Die Leitungen sind in den unteren, engeren Bereich des Schlitzes eingelegt und dort durch granulares Schüttmaterial umgeben. Der obere, breitere Querschnittsflächenbereich des Schlitzes ist wiederum durch aushärtbare Vergussmasse ausgefüllt. Indem der durch die ausgehärtete Vergussmasse gebildete obere Teil der Füllung des Schlitzes nach unten hin an den horizontalen Stufenflächen der Begrenzung des Schlitzes aufliegt, werden die Leitungen nicht mit Kräften belastet, welche gegebenenfalls von oben her auf die Vergussmasse andrücken - beispielsweise wenn ein schweres Fahrzeug über das Tiefbauwerk fährt.

Zu der Bauweise gemäß der EP 2526450 B1 wird durch die EP 2 868 827 B1 eine Weiterentwicklung vorgeschlagen. Gemäß dieser Weiterentwicklung wird der untere Bereich des Schlitzes in welchem sich die Leitungen und granulares Material befinden, nicht einfach nur durch ausgehärtete Vergussmasse nach oben hin abgedeckt, sondern durch eine Kombination eines metallischen U-Profils und Vergussmasse. Dazu wird nach dem Einlegen von Leitungen und granularem Material das U-Profil, welches durch viele quer zur Profilrichtung verlaufende Schlitze durchbrochenen ist, mit nach oben offener Querschnittsfläche in den Schlitz eingebracht, und dann von oben her mit Vergussmasse gefüllt. So wird ein festes Verbundprofil aus Metall und Vergussmasse gebildet, wobei die Vergussmasse auch dicht an den Schlitzwänden anliegt.

Beispielsweise die US 6371619 B1 zeigt ein Tiefbauwerk für das Führen einer Leitung, wobei die Leitung ein Glasfaserkabel ist. Im Material des Bodens - typischerweise einer Straße oder eines Bürgersteiges - ist ein Schlitz, also eine längliche Ausnehmung mit nach oben offener Querschnittsfläche, ausgebildet, indem der Schlitz gefräst wurde. Am Schlitzgrund ist die Leitung - im konkreten Beispiel ein Glasfaserkabel - eingelegt. Die nicht durch das Glasfaserkabel ausgefüllte Querschnittsfläche des Schlitzes ist durch eine aushärtbare Vergussmasse ausgefüllt. Bei der typischen Herstellung dieses Tiefbauwerks wird der Schlitz gefräst, dann wird das Glasfaserkabel eingelegt, dann werden Niederhalter eingesetzt, welche das Glasfaserkabel am Schlitzgrund in Position halten. Schließlich wird der Schlitz mit Vergussmasse in flüssigem Zustand flächenbündig mit der Oberfläche des Bodens ausgegossen und daraufhin die Vergussmasse aushärten gelassen.

Die EP 2972542 B2 beschreibt ebenfalls ein Tiefbauwerk für das Führen von Glasfaserkabeln in einem in einem Boden ausgebildeten Schlitz. In den unteren Bereich des Schlitzes ist ein Hohlprofil mit geschlossener Mantelfläche eingegeben, welches als Kabelkanal dienend in seinem Hohlraum ein oder mehrere Glasfaserkabel führt. Der außerhalb des Hohlprofils befindliche Querschnittsflächenbereich des Schlitzes ist durch aushärtbare Vergussmasse ausgefüllt.

Die US 3 473 339 A beschreibt ein Tiefbauwerk, bei dem in einem gefrästen oder geschliffenen Schlitz eine Leitung verlegt wird. Oberhalb der Leitung wird eine aus mehreren starren Abdeckelementen bestehende Schutzabdeckung eingesetzt, die auf seitlichen Schlitzflächen abgestützt ist. Die Abdeckung dient dazu, Lasten von oben aufzunehmen und die Leitung zu schützen. Der Leitungskanal unter der Abdeckung bleibt dabei unverfüllt. Die Abdeckelemente bilden in Längsrichtung eine Reihe und können unterschiedliche Höhenlagen ausgleichen, sind jedoch nicht für eine flexible Anpassung an gekrümmte Schlitzverläufe ausgelegt.

Die EP 2 868 827 B1 betrifft eine offene, in der Regel C- oder U-förmige Profilschiene aus Metall, die quer zu ihrer Längsrichtung mit Schlitzen und Einschnitten versehen ist. Diese Durchbrüche ermöglichen ein gezieltes Biegen der Schiene, sodass sie auch in gekrümmte Fugen eingesetzt werden kann.

Den beschriebenen Bauweisen ist gemeinsam, dass sie gut in einem festen, versiegelten Boden im Außenbereich, wie er typischerweise durch eine asphaltierte oder gepflasterte Straße gebildet ist, verwirklichbar sind, ohne dabei viel Platz zu beanspruchen, und dass die Leitungen dennoch gut vor mechanischer Belastung geschützt sind.

Die der Erfindung zu Grunde liegende Aufgabe besteht darin, ein Tiefbauwerk für das Führen von Glasfaserkabeln in einem Schlitz, welcher in einem Boden ausgebildet ist, gegenüber dem besprochen Stand der Technik verbessert zu gestalten. Durch die Verbesserungen soll erreicht werden, dass bei ansonsten vergleichbaren Rahmenbedingungen die Arbeitszeit auf der Baustelle für die Herstellung des Tiefbauwerkes verringert wird, und dass die nachträgliche Zugänglichkeit zu den verlegten Leitungen verbessert wird.

Für das Lösen der Aufgabe wird eine Bauweise gemäß Anspruch 1 vorgeschlagen.

Für das Lösen der Aufgabe wird von den bekannten Merkmalen ausgegangen, dass das Tiefbauwerk einen durch Fräsen oder Schleifen gebildeten Schlitz in einer Bodenfläche im Freien umfasst, in welchen eine Leitung eingelegt ist, wobei sich im Schlitz oberhalb der Leitung eine schützende Abdeckung erstreckt, welche aus Teilstücken besteht die jeweils an seitlichen Begrenzungsflächen des Schlitzvolumens nach unten hin abgestützt sind, wobei die Teilstücke entlang der Längsrichtung des Schlitzes aneinandergereiht und derart gelenkig miteinander verbunden sind, dass sie relativ zueinander um vertikale Achsen schwenkbar sind.

Es wird vorgeschlagen, jenen Volumenbereich des Schlitzes in welchem sich die Leitung befindet unverfüllt zu belassen und die den unverfüllten Volumenbereich überbrückenden Teilstücke bezüglich Biegefestigkeit um Biegeachsen, welche zur Längsrichtung des Schlitzes parallel liegen, so fest auszubilden, dass sie den überbrückten, unverfüllten Volumenbereich gegen die zu erwartenden Druckkraftbelastungen von oben her zu schützen.

Dadurch wird erreicht, dass nach dem Einlegen von Leitungen in den Schlitz keinerlei Schüttmasse auf die Leitungen geschüttet werden muss, und dass nach dem nachträglichen Entfernen der Abdeckung die Leitungen sofort zugänglich sind, ohne dass Schüttmasse entfernt werden muss.

Erfindungsgemäß ist die Abdeckung ein Nutprofil welches durch schlitzförmige Durchbrüche in einzelne Teilstücke geteilt ist, wobei die Längsrichtung der schlitzförmigen Durchbrüche normal zur Profilrichtung ausgerichtet ist, und sich die Länge der einzelnen schlitzförmigen Durchbrüche über die gesamte Breite der Basisfläche des U-Profils und über die gesamte Höhe von jeweils einer der beiden Flankenflächen erstreckt. Damit ist die Abdeckung gut handhabbar und bei der bestimmungsgemäßen Anordnung im Schlitz um vertikale Achsen gut biegsam, sodass es an Krümmungen des Schlitzverlaufes sehr gut anpassbar ist. Dennoch verliert es nur unwesentlich an Tragfähigkeit gegen Druckkräfte die von oben her darauf einwirken.

Bei der Anwendung an dem Schlitz in einer Bodenfläche im Freien, ist jedes der Teilstücke der Abdeckung an jeweils einer Schlitzseite abgestützt und es überbrückt den Schlitz wie eine Brücke quer zu dessen Längsrichtung. Entlang der Längsrichtung des Schlitzes liegen die Teilstücke hintereinander. Indem die Teilstücke gelenkig miteinander verbunden sind, kann die durch diese Aneinanderreihung gebildete Abdeckung auch problemlos entlang gekrümmt verlaufender Längsbereiche des Schlitzes verlaufen, und damit auch derartige Bereiche des Schlitzes abdecken.

Die Erfindung wird anhand von etwas stilisierten Zeichnungen veranschaulicht:
- Fig. 1: : zeigt in Schnittansicht mit zur Schlitzrichtung normal liegender Schnittebene drei beispielhafte erfindungsgemäße Varianten von erfindungsgemäßen Tiefbauwerken. Dabei kommt immer das gleiche Nutprofil zur Anwendung.
- Fig. 2: : zeigt das in den Bauweisen gemäß Fig. 1 verwendete vorteilhafte Nutprofil in Aufriss, Kreuzriss-Schnittansicht und Grundrissdarstellung, sowie eine verkürzte Version davon in Schrägrissdarstellung.
- Fig. 3: : zeigt einen Abschnitt eines weiteren vorteilhaften Nutprofils in Schrägrissdarstellung.
- Fig. 4: : zeigt in gleicher Ansicht wie Fig. 1 eine weitere beispielhafte Variante eines erfindungsgemäßen Tiefbauwerkes.

Bei den dargestellten erfindungsgemäßen Ausführungsbeispielen hat die jeweilige Abdeckung die Form eines Nutprofils, welches mit nach unten hin offener Querschnittsflächenseite voran über die Leitungen im Schlitz gestülpt ist.

Die Abdeckung kann somit Druckkräfte die von oben her auf diese einwirken, an den Leitungen vorbei nach unten hin ableiten. Es wirkt damit für die Leitungen als Einhausung die diese gegen mechanische Einwirkung von oben und von der Seite her schützt.

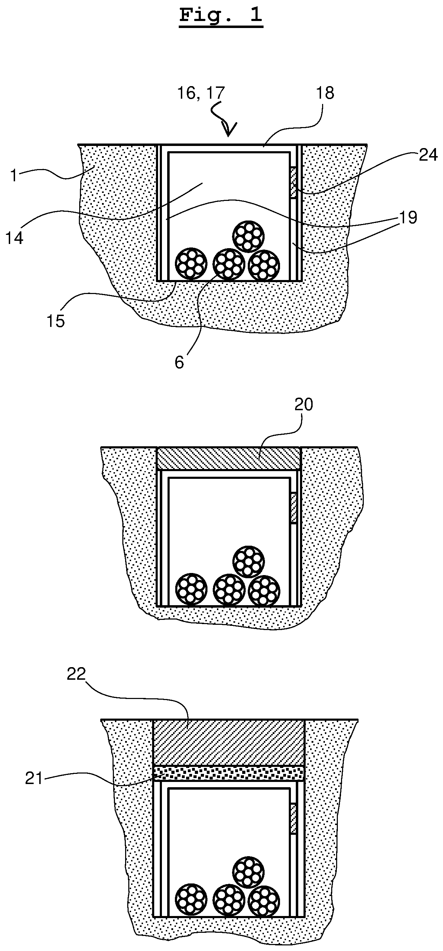

Gemäß Fig. 1 ist in den Boden 1 der Schlitz 14 mit typischerweise lotrecht angeordneter rechteckiger Querschnittsfläche gefräst oder geschliffen. Im Schlitz 14 verlaufen entlang von diesem die Leitungen 6, beispielsweise und typischerweise Glasfaserkabel; nach unten hin sind die Leitungen 6 zumindest mittelbar durch die Sohlenfläche 15 des Schlitzes 14 abgestützt.

Die erforderliche Abdeckung 16 der Leitungen 6 im Schlitz 14 ist durch Teilstücke 17 gebildet. Die Teilstücke 17 sind jeweils ein Abschnitt eines Nutprofils, also eines Profils dessen Querschnittsfläche die Querschnittsfläche einer Nut umschließt. Die Teilstücke 17 sind im Schlitz 14 angeordnet und in dessen Längsrichtung hintereinander angeordnet, sodass sie die Abdeckung 16 bilden, welche im Schlitz 14 entlang diesem verläuft. Die Teilstücke 17 sind mit nach unten hin offener Querschnittsflächenseite in den Schlitz 14 hineingesteckt und über die Leitungen 6 gestülpt, sodass die Leitungen 6 oben durch die Basisfläche 18 der Teilstücke 17 und seitlich durch die Flankenflächen 19 der Teilstücke 17 umschlossen sind.

Unten liegen die Teilstücke 17 auf der Sohlenfläche 15 des Schlitzes 14 auf und sind durch diese abgestützt. Bestimmungsgemäß sind die Teilstücke 17 so fest ausgebildet, dass sie den maximalen zu erwartenden Druckkräften von oben her standhalten können. Typischerweise sind dies jene Kräfte die dann auftreten, wenn ein Straßenfahrzeug auf der Oberfläche des Bodens 1 fährt und dabei den Schlitz 14 überfährt.

Damit die Teilstücke 17 bei Druckkraft von oben her nicht im Boden 1 versinken, ist es erforderlich, dass das unten an die Sohlenfläche 15 des Schlitzes 14 anschließende Material ausreichend fest ist. Wenn dieses Material das für Straßenbeläge übliche Material ist, also Asphalt, Beton oder Stein, ist das durchaus gegeben. Das ist immer dann der Fall, wenn beim Fräsen oder Schleifen des Schlitzes 14 weniger tief gefräst bzw. geschliffen wird, als die Schichtdicke des oberen festen Materials des Bodens 1 ist.

Wenn das Bodenmaterial an der Sohlenfläche 15 weniger fest sein sollte, ist es erforderlich eine separate feste Schicht als Boden des Schlitzes 14 auszubilden (nicht dargestellt) um die erfindungsgemäße Bauweise anwenden zu können.

Im Beispiel gemäß dem oberen Teilbild von Fig. 1 ist die durch die Teilstücke 17 gebildete Abdeckung 16 etwa bündig mit der Oberfläche des Bodens 1 ausgebildet, und die oben liegenden Basisflächen 18 der Teilstücke 17 stellt die sichtbare Abdeckung des Schlitzes 14 dar. Diese Ausführungsvariante ist sehr einfach und kostengünstig bei der Herstellung und bei Wartungsarbeiten. Bedenken können fallweise hinsichtlich Optik und hinsichtlich der Robustheit des Schutzes der Leitungen 6 vor allem gegen Vandalismus auftreten.

Im Beispiel gemäß dem mittleren Teilbild von Fig. 1 ist die Abdeckung 16 oben durch eine Abdeckschicht 20 bedeckt, deren obere Fläche wiederum etwa bündig mit der Oberfläche des Bodens 1 ausgebildet ist. Die Abdeckschicht kann beispielsweise durch Teile aus thermoplastischem Material oder aus metallischen Teilen gebildet sein, oder auch durch ein grobes Granulat. Gegenüber der Ausbildung entsprechend des oberen Teilbildes ist eine gefälligere Optik und auch ein robusterer Schutz der Leitungen 6 erreichbar ohne dass der Aufwand für Montage und Wartung sehr stark steigt.

Im Beispiel gemäß dem unteren Teilbild von Fig. 1 ist die Abdeckung 16 oben erst durch ein Dichtband 21 und dann durch eine ausgehärtete Vergussmasse 22 abgedeckt, wobei die obere Oberfläche der ausgehärteten Vergussmasse 22 mit der Oberfläche des Bodens 1 bündig abschließt. Mit dieser Bauweise ist es möglich eine Abdeckung des Schlitzes 14 auszubilden, welche weitgehend nahtlos in die Oberfläche des Bodens 1 übergeht. Allerdings ist der Arbeitsaufwand bei Wartungen am Schlitz 14 größer als bei den vorigen Versionen.

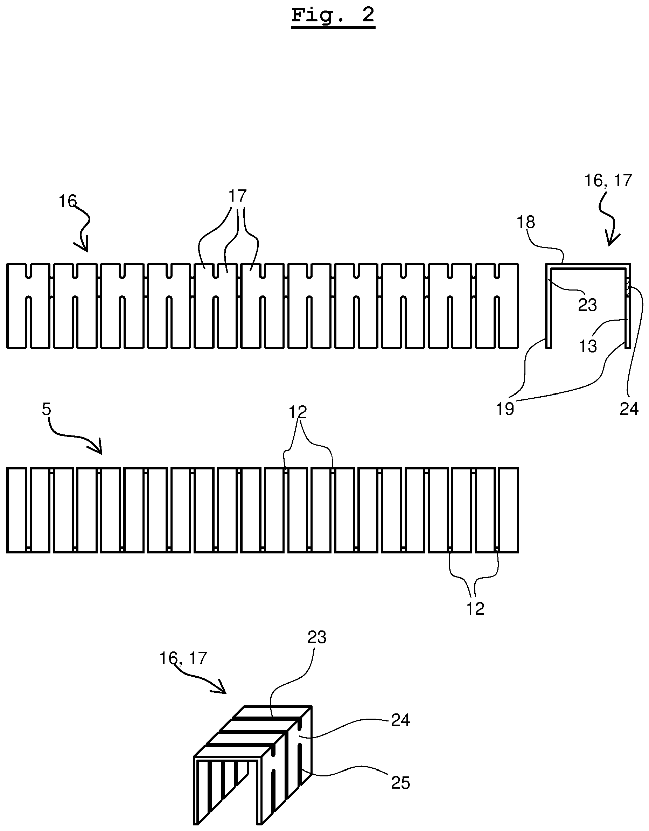

Fig. 2 zeigt etwas stilisiert in mehreren Ansichten in welcher Weise die Teilstücke 17 zur Bildung der Abdeckung 16 von Fig. 5 zusammenwirken.

Einerseits muss jedes Teilstück 17 für den vorgesehenen Einsatzfall gegen Druckkräfte die zwischen der Außenseite der Basisfläche 18 und den von dieser beabstandeten Stirnseiten der Flankenflächen 19 wirken, stabil sein, andererseits soll die als Verkettung der Teilstücken 17 gebildete Abdeckung 16 um Achsen, welche auf die Basisflächen 18 normal stehen, gut biegsam sein. Diese Biegsamkeit ist erforderlich damit die Abdeckung 16 auch in gekrümmt verlaufende Längsbereiche des Schlitzes 14 einfach eingelegt werden kann.

Die Abdeckung 16 ist typischerweise aus einem Stahlblechband gebildet, welches in die Form eines U-Profils gerollt wurde. Um die gewünschte Verformbarkeit zu erreichen weist dieses U-Profil regelmäßig wiederkehrend schlitzförmige Durchbrüche 23 auf, deren Längsrichtung normal zur Profilrichtung U-Profils ausgerichtet ist, und deren Länge sich bezüglich des U-Profils über die gesamte Breite der Basisfläche 18 und über die gesamte Höhe von jeweils nur einer der beiden Flankenflächen 19 erstreckt. An der jeweils anderen der beiden Flankenflächen 19 endet der jeweilige schlitzförmige Durchbruch 23 in einem Materialsteg 24.

Bevorzugt erstreckt sich - wie dargestellt - der Materialsteg 24 nicht bis an den unteren Rand der jeweiligen Flankenfläche 19. Stattdessen erstreckt sich von besagtem unteren Rand dieser Flankenfläche 19 ein ergänzender schlitzförmiger Durchbruch 25 auf die dem ersten schlitzförmigen Durchbruch 23 gegenüberliegende Seite des Materialsteges 24.

Entlang der Längsrichtung der Abdeckung 16 folgt auf einen schlitzförmigen Durchbruch 23, welcher die linke Flankenfläche vollkommen teilt, ein solcher schlitzförmiger Durchbruch 23, welcher die rechte Flankenfläche vollkommen teilt. Auf diese Weise ist bestmöglich eine weitgehend gleichförmige und weiche Biegsamkeit der Abdeckung 16 erreichbar.

Die schlitzförmigen Durchbrüche 23 teilen die Abdeckung 16 in die einzelnen Teilstücke 17 auf. Benachbarte Teilstücke 17 sind durch jeweils einen der Materialstege 24 verbunden. Indem die Materialstege 24 kleine Querschnittsfläche haben sind sie gut biegsam womit die Teilstücke 17 unter Überwindung von etwas Widerstandskraft gegen Verformung der Materialstege 24 gegeneinander schwenkbar sind.

Bevorzugt liegt das untere Ende des Materialsteges 24 oberhalb der halben Höhe der jeweiligen Flankenfläche 19, und das obere Ende des Materialsteges 24 unterhalb des Eckbereiches der Flankenfläche 19 zur Basisfläche **6.** Damit wird beste Handhabbarkeit der Abdeckung 16 erreicht.

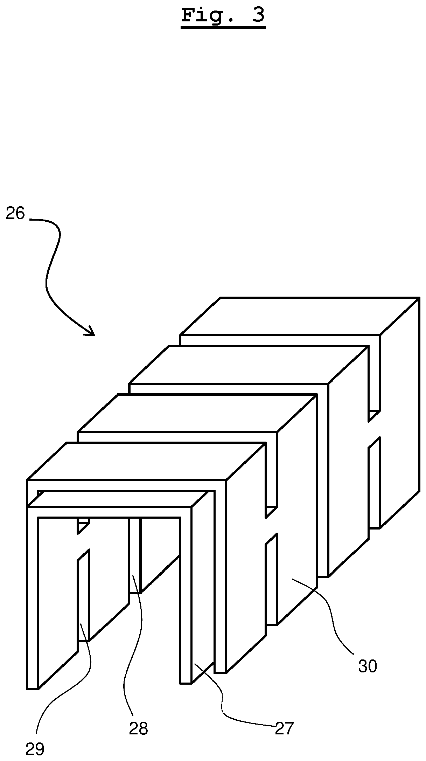

Fig. 3 zeigt beispielhaft eine weitere beispielhafte Abdeckung 26, welche als eine Kombination von zwei Abdeckungen in der Art wie die Abdeckung 16 von Fig. 2 betrachtet werden kann. Dabei ist ein inneres Nutprofil 27, welches wie an Hand von Fig. 2 beschrieben - zwecks Erhöhung seiner Biegsamkeit schlitzförmige Durchbrüche 28, 29 aufweist, durch ein weiteres, äußeres Nutprofil 30, das ebenfalls eine nach unten hin offene Querschnittsflächenseite aufweist, teilweise umfasst und nach oben hin abgedeckt. Dabei weist das abdeckende äußere Nutprofil 30 gleichartig wie das abgedeckte Nutprofil 27 schlitzförmige Durchbrüche auf, sodass es biegsam ist. Die Durchbrüche im abdeckenden Nutprofil 30 sind dabei gegenüber den Durchbrüchen 28, 29 im abgedeckten Nutprofil 27 in Profilrichtung versetzt. Damit wird erreicht, dass der Volumenbereich zwischen den Flanken der Abdeckung 26 nach obenhin lückenlos abgedeckt ist.

Beispielsweise kann das abdeckende Nutprofil 30 gemeinsam mit dem abgedeckten Nutprofil 27 aus einem gemeinsamen Blechband durch Stanzen und Rollformen gebildet sein, und die beiden Nutprofile 30, 26 dabei monolithisch verbunden bleiben. Es ist aber auch möglich separate Nutprofile 30, 26 herzustellen und diese übereinander zu stülpen und an einzelnen Stellen separat zu verbinden.

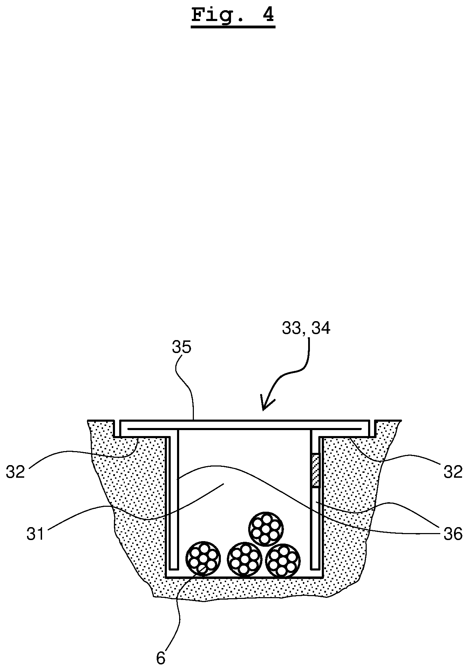

Fig. 4 zeigt ein erfindungsgemäßes Tiefbauwerk bei welchem der Schlitz 31 im Boden 1 eine Querschnittsfläche aufweist deren Breite sich nach unten hin an Schulterflächen 32 abrupt verringert.

Die zugehörige Abdeckung 33 besteht wiederum aus Teilstücken 34, welche die Form kurzer U-Profilstücke haben, und somit eine Basisfläche 35 und zwei Flankenflächen 36 ausweisen, wobei die Basisfläche 35 oben liegt.

Die Basisfläche 35 ist hier gegenüber dem Abstand der Außenflächen der Flankenflächen 36 verbreitert ausgeführt, sodass sie über die Flankenflächen 36 seitlich vorspringt. Mit den vorspringenden Flächen liegt die Basisfläche 35 des jeweiligen Teilstücks 34 der Abdeckung 33 auf den Schulterflächen 32 des Schlitzes 31 auf. Belastung durch Druckkräfte auf die Abdeckung 33 von oben her werden bei dieser Bauweise nicht unmittelbar an die Sohlenfläche des Schlitzes 31 abgeleitet, sondern an die Schulterflächen 32. Bei ansonsten vergleichbaren Randbedingungen kann damit das Tiefbauwerk größeren Druckkräften von oben her standhalten als jenes gemäß den Bauvarianten von Fig. 1.

Wie die Abdeckungen gemäß den Ausführungen Fig. 1, Fig. 2 und Fig. 3 ist auch die Abdeckung 33 ein Nutprofil, welches schlitzförmige Durchbrüche und Materialstege aufweist, welche die Trennung bzw. die die biegsamen Verbindungen zwischen den Teilstücken 34 der Abdeckung 33 darstellen.

Gemäß einer nicht dargestellten Variante der Erfindung kann der Schlitz im Boden 1 Schulterflächen aufweisen, die erfindungsgemäße Abdeckung dennoch auf der Sohlenfläche des Schlitzes aufliegen, und auf den Schulterflächen des Schlitzes oberhalb der erfindungsgemäßen Abdeckung eine zusätzliche Abdeckung aufliegen.

Gemäß einer nicht dargestellten Ergänzung zu der Erfindung weisen die Teilstücke der erfindungsgemäß angewandten Abdeckung Vorsprünge auf, welche von deren sonstiger Profilfläche aus seitlich vorspringen und in montiertem Zustand an jeweils einer Flankenfläche des Schlitzes im Boden unter Druck anliegen. Damit wird einfach eine Art Verankerung der Abdeckung im Schlitz erreicht.

Gemäß einer weiteren nicht dargestellten Ergänzung zu der Erfindung ist die jeweils ganz oben liegende Oberfläche der erfindungsgemäß angewandten Abdeckung derart ausgeführt, dass sie besser rutschfest ist als dies eine glatte Blechoberfläche ansonsten wäre. Diese rutschfeste Ausführung kann durch eine separate Beschichtung bewerkstelligt werden, oder durch Prägungen oder Stanzungen in der obersten Blechfläche. Derartige Prägungen sind von Trittblechen her bekannt; sie bewirken dass die Oberfläche scharfkantige Unebenheiten bekommt, wodurch sie rutschfest wird.

## Patentansprüche

1. Tiefbauwerk für das Führen einer Leitung (6) in einem durch Fräsen oder Schleifen gebildeten Schlitz (14, 31) in einer Bodenfläche im Freien, wobei das Tiefbauwerk den Schlitz (14, 31) und eine im Einbauzustand sich im Schlitz (14, 31) oberhalb der Leitung (6) erstreckende schützende Abdeckung (16, 26, 33) umfasst, welche aus Teilstücken (17, 34) besteht, die jeweils an seitlichen Begrenzungsflächen des Schlitzvolumens nach unten hin abgestützt sind, wobei die Teilstücke (17, 34) entlang der Längsrichtung des Schlitzes (14, 31) aneinandergereiht sind, wobei jener Volumenbereich des Schlitzes (14, 31) in welchem sich die Leitung (6) befindet unverfüllt ist, und die Teilstücke (17, 34) bezüglich Biegefestigkeit um Biegeachsen, welche zur Längsrichtung des Schlitzes (14, 31) parallel liegen, so fest ausgebildet sind, dass sie den überbrückten, unverfüllten Volumenbereich gegen die zu erwartenden Druckkraftbelastungen von oben her schütze, wobei die Abdeckung (16, 26, 33 ) die Umrisse eines Nutprofils aufweist, welches mit nach unten hin offener Querschnittsflächenseite voran über die Leitung (6) im Schlitz gestülpt ist, und wobei die Teilstücke (17, 34) der Abdeckung (16, 26, 23) die Form eines U-Profilstücks haben, wobei die Abdeckung eine obenliegende Basisfläche und zwei Flänkenflächen aufweist,
**dadurch gekennzeichnet, dass**
die Teilstücke (17,34) derart gelenkig miteinander verbunden sind, dass sie relativ zueinander um vertikale Achsen schwenkbar sind und, dass diese Teilstücke in ihrer Profilrichtung fluchtend hintereinander gereiht sind, und sich zwischen benachbarten Teilstücken (12, 17, 34) jeweils ein schlitzförmiger Durchbruch (23) befindet, dessen Längsrichtung normal zur Profilrichtung ausgerichtet ist, und dessen Länge sich über die gesamte Breite der Basisfläche und über die gesamte Höhe von jeweils nur einer der beiden Flankenflächen des U-Profils erstreckt.

2. Tiefbauwerk nach Anspruch 1, **dadurch gekennzeichnet, dass** sich seitliche Flankenflächen (19, 36) von den Teilstücken (12, 17, 34) der Abdeckung (16, 26, 33 ) in jenen Höhenbereich erstrecken, in welchem sich die Leitung (6) befindet.

3. Tiefbauwerk nach Anspruch 1 oder 2, **dadurch gekennzeichnet, dass** der untere Bereich der Abdeckung (16, 26, 33 ) auf der Sohlenfläche (15) des Schlitzes (14) aufliegt.

4. Tiefbauwerk nach einem der Ansprüche 1 bis 3, **dadurch gekennzeichnet, dass** die Basisfläche (35) beidseits über den durch die Flankenflächen (36) und deren Zwischenraum eingenommene Streifen vorspringt, und mit den beiden vorspringenden Bereichen an jeweils einer Schulterfläche (32) des Schlitzes (31) anliegt.

5. Tiefbauwerk nach einem der Ansprüche 1 bis 4, **dadurch gekennzeichnet, dass** die Abdeckung (16, 26, 33 ) an ihrer oben liegenden Fläche Durchbrüche aufweist, wobei ein Durchbruch durch einen weiteren Teil abgedeckt ist.

6. Tiefbauwerk nach Anspruch 5, **dadurch gekennzeichnet, dass** der weitere Teil ein Teilstück eines Nutprofils ist.

## Claims

1. Civil engineering structure for routing a line (6) in a slot (14, 31) formed by milling or grinding in an outdoor ground surface, wherein a protective cover (16, 26, 33) extends above the line (6) in the slot (14, 31) and comprises sections (17, 34) that are each provided with downward support on lateral limit areas of the slot volume, wherein the sections (17, 34) are arranged in a row in a longitudinal direction along the slot (14, 31) and are connected to each other with hinges in such a way that they can be pivoted relative to each other around vertical axes, wherein the volume area of the slot (14, 31) in which the line (6) is located is unfilled, and the sections (17, 34) are formed with rigidity with regard to bending strength around bending axes parallel with the longitudinal direction of the slot (14, 31) in such a way that they protect the bridged, unfilled volume area against the anticipated compressive forces from above, wherein the cover (16, 26, 23) has the contours of a groove profile, which is placed over the line (6) in the slot with the cross-sectional area side, which is open at the bottom, facing forwards,
**characterised in that**
the sections (17, 34) of the cover (16, 26, 23) have the shape of U-profile elements, and that these sections are aligned in a row in their profile direction, and a slot-shaped opening (23) is located between each of the adjacent sections (12, 17, 34), and the longitudinal direction of the slot-shaped opening (23) is aligned perpendicular to the profile direction, and its length extends over the entire width of the base area and over the entire height of only one of the two flank areas of the U-profile in each case.

2. Civil engineering structure according to claim 1, **characterised in that** the lateral flank areas (19, 36) of the sections (12, 17, 34) of the cover (16, 26, 23) extend into the height range in which the line (6) is located.

3. Civil engineering structure according to claim 1 or 2, **characterised in that** the lower area of the cover (16, 26, 23) rests on the base surface (15) of the slot (14).

4. Civil engineering structure according to one of claims 1 to 3, **characterised in that** the cover (33) has a base area (35) on top and two flank areas (36), wherein the base area (35) projects on both sides over the strip formed by the flank areas (36) and the space between them, and in each case rests with the two projecting areas on a shoulder area (32) of the slot (31).

5. Civil engineering structure according to one of claims 1 to 4, **characterised in that** the cover (16, 26, 23) has openings on its top surface, wherein an opening is covered by an additional piece.

6. Civil engineering structure according to claim 5, **characterised in that** the additional piece is a section of a groove profile.

## Revendications

1. Structure souterraine destinée au passage d'un câble (6) dans une fente (14, 31) formée par fraisage ou meulage dans une surface au sol à l'extérieur, un recouvrement (16, 26, 33) de protection s'étendant dans la fente (14, 31) au-dessus du câble (6), ledit recouvrement se composant d'éléments (17, 34) soutenus vers le bas respectivement au niveau des surfaces de délimitation latérales du volume de la fente, les éléments (17, 34) étant alignés l'un derrière l'autre le long du sens longitudinal de la fente (14, 31), et étant reliés entre eux de manière articulée de telle sorte qu'ils peuvent être pivotés les uns par rapport aux autres autour d'axes verticaux, ledit volume de la fente (14, 31) dans lequel se situe le câble (6) est vide, et les éléments (17, 34) en ce qui concerne la résistance à la flexion autour d'axes de flexion parallèles au sens longitudinal de la fente (14, 31) étant de telle sorte solidaires qu'ils protègent par le haut le volume vide ponté contre des expositions possibles à des forces de compression, le recouvrement (16, 26, 23) présentant le contour d'un profilé rainuré, lequel est emmanché dans la fente au-dessus du câble (6) dans la fente, avec en premier le côté ouvert vers le bas de la section transversale,
**caractérisée en ce que**
les éléments (17, 34) du recouvrement (16, 26, 23) ont la forme d'une pièce profilée en U, et que ces éléments sont alignés l'un derrière l'autre dans le sens du profilé, et qu'entre des éléments (12, 17, 34) adjacents se trouve respectivement une percée (23) en forme de fente, dont le sens longitudinal est normalement orienté vers le sens du profilé, et dont la longueur s'étend sur toute la largeur de la surface de base et sur toute la hauteur de respectivement une seule des deux surfaces de flan du profilé en U.

2. Structure souterraine selon la revendication 1, **caractérisée en ce que** les surfaces de flan (19, 36) latérales s'étendent depuis les éléments (12, 17, 34) du recouvrement (16, 26, 23) dans la plage de hauteur dans laquelle se situe le câble (6).

3. Structure souterraine selon la revendication 1 ou 2, **caractérisée en ce que** la zone inférieure du recouvrement (16, 26, 23) repose sur la surface de semelle (15) de la fente (14).

4. Structure souterraine selon l'une des revendications 1 à 3, **caractérisée en ce que** le recouvrement (33) présente une surface de base (35) supérieure et deux surfaces de flan (36), la surface de base (35) faisant saillie des deux côtés au-dessus des bandes prises au travers des surfaces de flan (36) et de leurs interstices, et reposant avec les deux zones en saillie contre respectivement une surface d'épaulement (32) de la fente (31).

5. Structure souterraine selon l'une des revendications 1 à 4, **caractérisée en ce que** le recouvrement (16, 26, 23) présente sur sa face supérieure des percées, une percée étant recouverte par une autre pièce.

6. Structure souterraine selon la revendication 5, **caractérisée en ce que** l'autre pièce constitue un élément d'un profilé rainuré.
